# EUROPEAN PATENT APPLICATION

(11) **EP 4 382 627 A1**
(43) Date of publication of application: **12.06.2024**
(21) Application number: 21952711.6
(22) Date of filing: 02.08.2021
(51) Int. Cl.: C21D 9/46, C22C 38/00, C22C 38/44, C23C 24/06, C23C 26/00

(54) **STAINLESS STEEL SHEET, SEPARATOR FOR FUEL BATTERY, FUEL BATTERY CELL AND FUEL BATTERY STACK**

(71) Applicant: NIPPON STEEL Chemical & Material Co., Ltd., Tokyo 103-0027 (JP)
(72) Inventor: NOSE, Koichi, Tokyo 100-8071 (JP); IMAMURA, Junko, Tokyo 100-8071 (JP); SATO, Haruka, Tokyo 100-8071 (JP); KAMINAKA, Hideya, Tokyo 100-8071 (JP)
(74) Representative: Vossius & Partner Patentanwälte Rechtsanwälte mbB
(86) International application number: PCT/JP2021/028664
(87) International publication number: WO 2023/012881

(57) **Abstract**

The present invention has as its technical issue giving a stainless steel sheet excellent in corrosion resistance enough of a magnetic property to be able to by held and manipulated by magnetic force. To solve this, there is provided a stainless steel sheet having a 5 to 200 µm thickness, having, in a cross-section vertical to a rolling direction, a first region comprising mainly an austenite phase formed at a surface layer of one or both the surfaces and a second region comprising mainly a ferrite phase at a region other than the first region, and having an area ratio of the second region of 20% or more.

## Description

### FIELD

The present invention relates to a stainless steel sheet.

### BACKGROUND

Along with the smaller size and lighter weight of electronic equipment, electronic equipment has been made increasingly portable and mobile. Smaller size and lighter weight are being sought from many electronic equipment. In particular, the smaller size and lighter weight of batteries sought in smart phones and other electronic equipment demand leading edge level specifications of the times. Further to build a carbon-free society, demand for automotive batteries and batteries for household use has also been rising. Along with smaller size and lighter weight, strength of the material itself, corrosion resistance, and other functions are also being demanded. For such applications, use of stainless steel sheet is promising.

For example, a separator in a polymer electrolyte fuel cell (PEFC) performs the following functions:
· The function as a conduction member for contacting a gas diffusion layer (GDL) to establish electrical conduction,
· The function as a container for a battery cell in which water generated inside or condensing water contains corrosive constituents derived from the electrolysis membrane etc. thereby forming an aqueous solution corrosive environment, and
· The function as a channel for circulation of oxygen, air, and other oxidizing gases and hydrogen and other fuel gases and supplying gas through the GDL to a membrane electrode assembly (MEA).

For this reason, a material for separator use has been asked to exhibit (1) low contact resistance with carbon paper, (2) high corrosion resistance not dissolving out in the internal environment of the fuel battery, and (3) high workability for forming specific shapes.

PTLs 1 to 4 describe treating stainless steel in a high temperature nitrogen atmosphere to make it absorb nitrogen and make the microstructure austenitic.

### [CITATIONS LIST]

### [PATENT LITERATURE]

[PTL 1] International Publication WO2019/058409
[PTL 2] Japanese Unexamined Patent Publication No. 2006-316338
[PTL 3] Japanese Unexamined Patent Publication No. 2004-68115
[PTL 4] Japanese Unexamined Patent Publication No. 2012-92413

### SUMMARY

### [TECHNICAL PROBLEM]

In general, a metal separator for PEFC use is produced by using metal foil with a thickness of 100 µm or so and working it into a shape provided with fine grooves. This is combined with the carbon paper, gaskets, seals, etc. forming the MEA or GDL to assemble a fuel battery cell. Further, fuel battery cells are combined to form a fuel battery stack.

In the process of production of such a fuel battery, the metal foil separator has to be held without allowing the groove shapes etc. to be deformed and handled to enable it to be manipulated and moved for assembly. To do this on a mass production scale, use of a robot operating at a high speed may be considered. However, it is difficult to control the easily deformable metal foil so as to be mechanically gripped. The method of using suction pads etc. to hold the foil by vacuum also cannot be applied to separators in which channels of groove structures are formed. Holding foil by magnetic force is a general solution, but the austenitic stainless steel suitable as a material for separator use in which corrosion resistance is demanded is nonmagnetic. Holding using magnetic force is not possible. In this way, even if a stainless steel part excellent functionally in corrosion resistance etc., depending on the worked shape, sometimes mechanical conveyance is difficult. Holding and conveyance by magnetic force are being demanded.

The present invention has as its technical issue giving a stainless steel sheet excellent in corrosion resistance enough of magnetic properties to be able to by held and manipulated by magnetic force and has as its object the provision of such a stainless steel sheet excellent in corrosion resistance.

### [SOLUTION TO PROBLEM]

The inventors engaged in various studies to solve the above technical problem. As a result, they came up with the idea of obtaining a stainless steel sheet realizing both corrosion resistance and magnetic properties by rendering it a microstructure having a region comprising mainly an austenitic phase high in corrosion resistance (first region) at a surface layer and having a region comprising mainly a ferrite phase having magnetic properties (second region) at the inside.

The inventors discovered that by making ferritic stainless steel absorb nitrogen to render the microstructure austenite and controlling the reaction in the middle of that, it is possible to form a microstructure with a surface layer comprised of a region comprising mainly an austenitic phase and with an inside comprised of a region comprising mainly a ferrite phase. The present invention was completed based on the above discovery. The gist of the present invention is as follows:
[1] A stainless steel sheet, which stainless steel sheet has a 5 to 200 µm thickness, has, in a cross-section vertical to a rolling direction, a first region comprising mainly an austenite phase formed at a surface layer of one or both the surfaces and a second region comprising mainly a ferrite phase at a region other than the first region, and has an area ratio of the second region of 20% or more.
[2] The stainless steel sheet according to the above [1], wherein a chemical composition of the second region comprises, by mass%,
   Cr: 20.00 to 26.00%,
   N: 0.10% or less,
   Si: 2.00% or less,
   C: 0.040% or less,
   P: 0.030% or less,
   S: 0.030% or less,
   Mn: 1.50% or less,
   Cu: 0.50% or less,
   Mo: 3.00% or less,
   Ni: 5.00% or less,
   Ca: 50 ppm or less,
   sol. Al: 300 ppm or less, and
   balance: Fe and impurities.
[3] The stainless steel sheet according to the above [2], wherein a chemical composition of the first region comprises, by mass%,
   N: 0.01 to 5.0% and,
   other than N, is the same as the second region.
[4] The stainless steel sheet according to any one of the above [1] to [3], further comprising a conductive layer having a conductive carbonaceous material at least at one surface.
[5] A separator for a fuel battery having the stainless steel sheet according to any one of the above [1] to [4].
[6] A fuel battery cell having the separators for a fuel battery according to the above [5].
[7] A fuel battery stack having a plurality of the fuel battery cells according to the above [6].

### [ADVANTAGEOUS EFFECTS OF INVENTION]

According to the present invention, a stainless steel sheet having enough of magnetic properties enabling holding and manipulation by magnetic force and excellent in corrosion resistance is obtained.

### BRIEF DESCRIPTION OF DRAWINGS

FIG. 1 is one example of a cross-sectional photograph of a stainless steel sheet having a first region comprising mainly an austenite phase and a second region comprising mainly a ferrite phase.
FIG. 2 is one example of a cross-sectional photograph of a stainless steel sheet not having a second region.
FIG. 3 is a flow chart showing one example of a method of production of a stainless steel sheet according to one embodiment of the present invention.
FIG. 4 is a disassembled perspective view showing one example of a fuel battery cell.
FIG. 5 is a perspective view of a fuel battery comprised of a set of a plurality of cells.

### DESCRIPTION OF EMBODIMENTS

Below, a stainless steel sheet according to one embodiment of the present invention will be explained.

### [Stainless Steel Sheet]

### [Chemical Composition]

The stainless steel sheet according to one embodiment of the present invention has a chemical composition explained below: In the following explanation, the "%" and "ppm" of the contents of the elements, unless otherwise indicated, mean the mass% and mass ppm.

### Cr: 20.00 to 26.00%

Chromium (Cr) has the action of forming a Cr₂O₃ passivation film on the front surface of stainless steel so as to make the corrosion resistance better. The lower limit of the Cr content is made 20%. If less than 20.00%, there is a possibility of the microstructure rendered austenite by absorption of nitrogen including a large amount of the martensite phase. Further, if Cr is small in amount, if strongly working the sheet, there is a possibility of a deformation-induced martensite phase being formed. On the other hand, along with an increase in the Cr content, the deformation resistance rises. The upper limit of the Cr content is made 26.00% so as to secure a stabler manufacturing ability (in particular, flatness of steel sheet with thin thickness). The lower limit of the Cr content preferably may be made 21.00%, 22.00%, or 23.00%. The upper limit of the Cr content preferably may be made 25.00% or 24.00%.

### N of first region: 0.01 to 5.00%

The nitrogen (N) of the first region has the action of making the corrosion resistance better by being contained in a range not forming nitrides in the stainless steel. Further, it is an element promoting the austenitization of stainless steel. The lower limit of the N content is 0.01%. This is to secure the minimum amount of nitrogen necessary for obtaining a microstructure comprising mainly an austenite phase at a surface layer in Fe-Cr-N-based stainless steel. The upper limit of the N content is 5.00%. This is to suppress formation of nitrides such as Cr₂N and CrN in the crystal grains. The lower limit of the N content can be made 0.02%, 0.04%, 0.06%, 0.08%, 0.10%, 0.12%, 0.14%, 0.16%, 0.18%, 0.20%, 0.25%, 0.30%, 0.35%, or 0.40%. The upper limit of the N content can be made 4.75%, 4.50%, 4.25%, 4.00%, 3.75%, 3.50%, 3.25%, 3.00%, 2.80%, 2.60%, 2.40%, 2.20%, 2.00%, 1.80%, 1.60%, 1.50%, 1.40%, 1.30%, or 1.20%.

### N of second region: 0.10% or less

The nitrogen (N) of the second region may be made 0.10% or less. As in one embodiment of the method of production of the present invention explained later, if rolling a base material having a chemical composition similar to the second region until a predetermined sheet thickness and then treating the surface for nitridation so as to form the first region, if the content of N in the base material is more than 0.10%, the deformation resistance will become higher and it will become difficult to render it steel sheet by rolling. The N content of the second region is the same as the base material, so the N content of the second region is made 0.10% or less. The upper limit of the N content in the base material (that is, the second region) preferably may be 0.09%, 0.08%, 0.07%, 0.06%, or 0.05%.

### Si: 2.00% or less

Silicon (Si) is optionally contained. Si is an element causing the workability of stainless steel to deteriorate, so usually is not an element which is proactively added. On the other hand, Si has the action of forming SiO₂ at the surface and covering and protecting the Cr₂O₃ passivation film if the stainless steel is exposed to a transpassive corrosive environment. If making Si be included, the upper limit of the Si content is made 2.0%. If the Si content is more than 2.00%, the workability deteriorates or a brittle σ phase easily precipitates during production and sometimes fracture occurs in the process of working the steel to sheet or sometimes the flatness becomes poor making the sheet a shape not suitable for press working. The upper limit of the Si content is preferably 1.90%, 1.80%, 1.70%, 1.60%, or 1.50%. If making Si be included, preferably it may be made 0.10% or more.

### C: 0.040% or less

Carbon (C) is optionally contained. C is a solution strengthening element and contributes to improvement of the strength of the stainless steel. However, in the stainless steel sheet of the present embodiment, N is made to be included in a certain amount or more, so the solution strengthening by the N is sufficient and C need not be added. If the C content is too great, carbides are formed in a large amount in the production process. These carbides form starting points of fracture whereby the steel falls in shapeability. Therefore, the C content is made 0.040% or less. The upper limit of the C content is preferably 0.038%, 0.036%, 0.034%, 0.032%, or 0.030%. If making C be included, preferably it may be made 0.001% or more.

### P: 0.030% or less

Phosphorous (P) is an impurity. P segregates at the grain boundaries at the time of solidification and raises the solidification cracking sensitivity. Therefore, the P content is preferably made as low as possible. For this reason, the P content is made 0.030% or less.

### S: 0.030% or less

Sulfur (S) is an impurity. S segregates at the grain boundaries at the time of solidification and raises the solidification cracking sensitivity. Therefore, the S content is preferably made as low as possible. For this reason, the S content is made 0.030% or less.

### Mn: 1.50% or less

Manganese (Mn) is optionally contained. Mn keeps down the drop in hot workability due to S. Mn further deoxidizes stainless steel. However, if the Mn content becomes greater, precipitation of the σ phase and other intermetallic compound phases is promoted. Due to the precipitation of the σ phase, the microstructure falls in stability and the stainless steel falls in toughness and ductility. For this reason, the Mn content is made 1.50% or less. The upper limit of the Mn content is preferably 1.40%, 1.30%, 1.20%, 1.10%, 1.00%, 0.90%, 0.80%, 0.70%, 0.60%, or 0.50%. If making Mn be included, it preferably may be made 0.10% or more.

### Cu: 0.50% or less

Copper (Cu) is optionally contained. Cu is an element which easily segregates at the grain boundaries and stabilizes the austenite. Cu acts as a solution strengthening element and contributes to a rise in the high temperature strength required as a structural material, so may be included in accordance with need. If the Cu content becomes greater, the formation of ferrite is suppressed during the solidification at the time of casting and the sensitivity to solidification cracking rises. Further, if the Cu content is great, the hot workability is liable to fall. For this reason, the Cu content is made 0.50% or less. The upper limit of the Cu content preferably may be made 0.47%, 0.43%, 0.40%, 0.37%, 0.33%, 0.30%, 0.27%, 0.23%, or 0.20%. If making Cu be included, it preferably may be made 0.01% or more.

### Mo: 3.00% or less

Molybdenum (Mo) is optionally contained. However, when particularly desiring to raise the corrosion resistance, since Mo has the effect of raising the corrosion resistance of stainless steel, it may be added in a range up to 3.00%. However, Mo is an expensive element classified as a rare metal and is not preferable from the viewpoint of providing a material excellent in economicalness. Further, if the Mo content is too great, the hot workability falls and sometimes a microstructure comprising mainly an austenite phase cannot be obtained at a surface layer. For this reason, the Mo content is made 3.00% or less. The upper limit of the Mo content is preferably 2.75%, 2.50%, 2.25%, 2.00%, 1.80%, 1.60%, 1.50%, 1.30%, 1.10%, 1.00%, 0.90%, 0.80%, 0.70%, 0.60%, or 0.50%. If making Mo be included, it may be made 0.01% or more, 0.05% or more, 0.10% or more, 0.20% or more, or 0.30% or more.

### Ni: 5.00% or less

Nickel (Ni) is optionally contained. However, Ni is an element promoting the austenitization of stainless steel. Further, it contributes to improvement of the corrosion resistance as well, so may be made to be included to a limit of 5.00% if in particular desiring to raise the corrosion resistance or desiring to improve the workability. However, Ni is a rare metal and is not preferable from the viewpoint of providing a material excellent in economicalness. Further, the elution of Ni ions is liable to cause a reduction in the speed of the oxidation reduction reaction at the interface of the platinum catalyst and polymer electrolysis membrane. For this reason, the Ni content is made 5.0% or less. The upper limit of the Ni content preferably may be made 4.50%. 4.00%, 3.50%, 3.00%, 2.50%, 2.00%, 1.50%, 1.00%, 0.80%, 0.70%, 0.6%, 0.5%, 0.4%, 0.3%, or 0.2%. If making Ni be included, it preferably may be made 0.10% or more.

### Ca: less than 50 ppm

Calcium (Ca) is an impurity. As nonmetallic inclusions able to form starting points of corrosion of stainless steel, in general CaS and MnS are known. To keep the CaS which form starting points of corrosion from being produced in a large amount, the Ca content is made less than 50 ppm.

### sol. Al: less than 300 ppm

Aluminum (Al) is optionally contained. Al deoxidizes stainless steel. However, if the Al content is too high, the steel falls in cleanliness and the stainless steel falls in workability and ductility. Therefore, the Al content is less than 300 ppm. If making Al be included, it preferably may be made 100 ppm or more. Note that, in this Description, the Al content means the content of soluble Al (sol. Al).

The balance of the chemical composition of the stainless steel sheet according to the present embodiment is comprised of Fe and impurities. The impurities referred to here mean elements unintentionally entering from ore or scrap used as raw materials of the steel or elements entering from the environment of the production process etc.

### [Sheet Thickness]

The stainless steel sheet according to the present embodiment has a thickness of 5 to 200 µm. The thickness is defined as the average thickness.

The lower limit of sheet thickness is made 5 µm because if the sheet thickness is less than 5 µm, it becomes difficult for the sheet to be economically produced by rolling while maintaining the shape well and, in addition, inclusions etc. are increasingly liable to cause penetration pits and other defects. The separator is also a barrier wall, so penetration pits are not allowed. This does not apply if used for other than separator applications. The lower limit of the sheet thickness is preferably 6 µm, 7 µm, 8 µm, 9 µm, 10 µm, 15 µm, 20 µm, 25 µm, 30 µm, 35 µm, 40 µm, 45 µm, or 50 µm.

The upper limit of the sheet thickness is made 200 µm so as to prevent the total thickness from becoming too great when providing a conductive layer on the stainless steel sheet. The upper limit of the sheet thickness preferably may be made 180 µm, 160 µm, 140 µm, 120 µm, 110 µm, or 100 µm.

### [Microstructure]

The stainless steel sheet according to the present embodiment has a lamellar first region comprising mainly an austenite phase formed on the surface layer (layer directly under surface) of one or both of its surfaces (front and back surfaces or either one surface) and a lamellar second region comprising mainly a ferrite phase as a layer other than the first region. In the stainless steel sheet according to the present embodiment, the second region has a cross-sectional area ratio of 20% or more at the cross-section vertical to the rolling direction. The stainless steel sheet according to the present embodiment may be comprised of only the first region and the second region. For example, if there is a first region at the surface layers of both surfaces of the steel sheet, the second region is formed between the first regions of the two surface layers.

### (1) First region

The stainless steel sheet according to the present embodiment has a lamellar first region comprising mainly an austenite phase formed at a surface layer of its front and back surfaces or either one of the surfaces. The stainless steel sheet according to the present embodiment has excellent corrosion resistance because of this.

The first region is a region comprising mainly an austenite phase in all of the phases (including ferrite phase, austenite phase, martensite phase, and other phases of iron, Cr₂N and CrN and other compound phases, and passivation film etc.) able to be detected by X-ray diffraction (XRD). The "region comprising mainly an austenite phase" indicates a region in XRD from the surface where the total (IA) of peak intensities of the top two strongest peaks of the austenite phase is 2 times or more of the total (IB) of the top two strongest peaks of the other phases. The IA at the first region is more preferably 3 times or more of IB, 5 times or more, 6 times or more, 7 times or more, 8 times or more, 9 times or more, or 10 times or more.

If the front and back surfaces of the stainless steel sheet are covered by layers comprising mainly austenite phases, corrosion resistance can be secured without regard as to the thicknesses of those layers. For this reason, the first region has any thickness. Of course, to more reliably obtain corrosion resistance, the thickness of the first region (thickness of one side, same below) preferably is 2 µm or more at the thinnest part. The thickness of the first region more preferably may be 3 µm or more at the thinnest part.

On the other hand, if the thickness of the first region is too great, sometimes places will be formed where the ferrite phase of the second region are split. In this case, when held by a magnet, unevenness in the method of attraction occurs depending on the location and the material is liable to end up being made to deform. For this reason, the thickness of the first region is preferably 40% or less of the thickness of the stainless steel sheet at the thickest part. The thickness of the first region is more preferably 30% or less of the thickness of the stainless steel sheet at the thickest part.

### (2) Second region

The stainless steel sheet according to the present embodiment has a lamellar second region comprising mainly a ferrite phase as a layer other than the first region. The stainless steel sheet according to the present embodiment can be provided with a sufficient magnetic property for being held and manipulated by magnetic force due to this.

The second region is a region comprising mainly a ferrite phase in all of the phases (including ferrite phase, austenite phase, martensite phase, and other phases of iron, Cr₂N and CrN and other compound phases, etc.) able to be detected by XRD. In the stainless steel sheet, it preferably indicates, in XRD using a sample ground down to half of the sheet thickness (center of sheet thickness in cross-sectional direction) from one surface and using the half sheet thickness position as the measurement surface, the region where the total (IF) of peak intensities of up to the top two strongest peaks of the ferrite phase is 2 times or more of the total (IB) of up to the top two the strongest peaks of the other phases. The IF at the second region is more preferably 3 times or more of IB, 5 times or more, 6 times or more, 7 times or more, 8 times or more, 9 times or more, or 10 times or more.

However, the ferrite phase and the martensite phase are difficult to differentiate by XRD, so entry of the martensite phase is judged by examination of the microstructure by an optical microscope. A martensite structure exhibits a lath shape or acicular structure and can be simply differentiated from a granular ferrite structure. Of course, if introducing an austenite phase in ferritic stainless steel from the surface by nitrogen absorption in production, the second region becomes a part not an austenite phase even at the time of high temperature treatment, so there is usually no martensite phase formed when lowering the temperature from the austenite phase.

If the later explained provision of the cross-sectional area ratio is satisfied, the second region may be any thickness. However, if there is a place where the second region is so thick so as to reach the surface, the ferrite phase with an inferior corrosion resistance compared with the surrounding austenite phase will easily be exposed at the surface and selective corrosion is liable to proceed. For this reason, the thickness of the second region at the thickest part is preferably (thickness of stainless steel sheet-4 µm) or less. The thickness of the second region is more preferably (thickness of stainless steel sheet-6 µm) or less at the thickest part.

On the other hand, if the thickness of the second region is too small and there are places where the ferrite phase is split, when held by a magnet, unevenness in the method of attraction occurs depending on the location and the material is liable to end up being made to deform. For this reason, the thickness of the second region is preferably 20% or more of the thickness of the stainless steel sheet at the thinnest part. The thickness of the second region is more preferably 40% or more of the thickness of the stainless steel sheet at the thinnest part.

### (3) Cross-sectional area ratio of second region

The stainless steel sheet according to the present embodiment has an area ratio of the above-mentioned second region in a cross-section vertical to the rolling direction (sometimes also called "cross-sectional area ratio") of 20% or more. Due to this, the stainless steel sheet according to the present embodiment can be provided with a sufficient magnetic property for being held and manipulated by magnetic force. The lower limit of the cross-sectional area ratio of the second region is preferably 30%. On the other hand, if the cross-sectional area ratio of the second region is too high, the ferrite phase is are liable to be exposed at the surface. The upper limit of the cross-sectional area ratio of the second region is preferably 80%, 70%, or 60%.

The cross-sectional area ratio of the second region is measured as follows:
From the stainless steel sheet, a test piece is taken so that the cross-section vertical to the rolling direction becomes the examined surface. The examined surface is polished and etched. In the range of chemical composition of the present embodiment, an etching solution comprised of aqua regia and glycerin in a volume ratio of 4:1 can be suitably used.

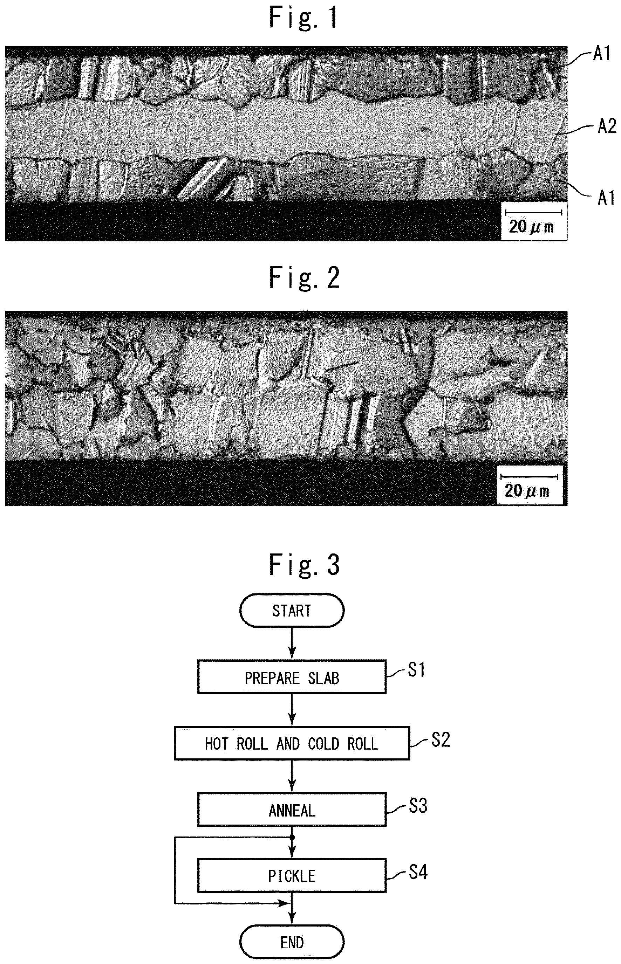

FIG. 1 is one example of a cross-sectional photograph of a stainless steel sheet having a first region A1 and a second region A2. FIG. 2 is one example of a cross-sectional photograph of a stainless steel sheet not having a second region. Note that FIG. 1 is a cross-sectional photograph of TP No. 4 of the examples explained later. As shown in FIG. 1, if stainless steel sheet has a first region Al and a second region A2, the boundary can be clearly discerned by etching.

The boundary between the first region and the second region can be confirmed by analyzing the crystal grains straddling the boundary by scanning electron microscopy-energy dispersive X-ray spectroscopy (SEM-EDS). Specifically, if performing semiquantitative analysis by SEM-EDS limiting the elements to Cr, Fe, and N, in the first region, N becomes ≥1.0 at% while in the second region, N becomes <1.0 at%.

In the region judged to be first region by the above-mentioned examination by an optical microscope and analysis of N concentration, strictly speaking, there is a possibility of the presence of fine lamellar structures of Cr₂N and α due to a γ→Cr₂N+α eutectoid reaction after forming an austenite phase. However, in calculation of the cross-sectional area ratio, these parts are also deemed to be included in the first region. Similarly, in the first region and second region, strictly speaking sometimes inclusions or precipitates will be included, but in calculating the cross-sectional area ratio, these parts are also deemed to be included in the surrounding region (first region or second region).

After the above method is used to determine the boundary between the first region and second region, the respective areas are found by image analysis software. Defining the area of the second region as "A" and the area of the region other than the second region is "B", the cross-sectional area ratio of the second region is found from A/(A+B).

Note that if a stainless steel sheet is long, it is preferable to cut the stainless steel sheet into equal parts, measure the cross-sectional area ratios at a plurality of cross-sections (for example, 10 cross-sections), and find the average of the same.

### (4) Others

The stainless steel sheet according to the present embodiment, as an average of the overall thickness of the stainless steel sheet, preferably is small in ratios of phases other than the austenite phase and ferrite phase. More specifically, as an average of the overall thickness of the stainless steel sheet, the ratios of phases other than the austenite phase and ferrite phase with respect to all phases able to be detected by XRD (including ferrite phase, austenite phase, martensite phase, and other iron phases and Cr₂N and CrN and other compound phases etc.) are preferably small.

The stainless steel sheet according to the present embodiment is a thin one of a thickness of 5 to 200 µm, but is too thick for evaluation of the total thickness by XRD. The microstructure of the stainless steel sheet can be evaluated by superposing a plurality of stainless steel sheets, polishing them inclined, and measuring them by XRD. For example, 10 thickness 30 µm stainless steel sheets cut to widths of 20 mm can be superposed, buried in resin, and enlarged 10-fold by 6° inclined polishing to obtain a sample having a 3 mm×20 mm evaluation surface.

The XRD is measured so that all of the evaluation surface of such a sample falls in the irradiated area of the X-rays. At this time, the total of the four peak intensities of up to the top two strongest peaks of the ferrite phase and up to the top two strongest peaks of the austenite phase (IAF) and the total of the peak intensities of up to the respective top two strongest peaks of all the other phases besides the ferrite phase and austenite phase (IBS) preferably satisfy the relation of IBS/IAF≤0.1. More preferably, IBS/IAF≤0.05.

However, if the martensite phase is present, with XRD, differentiating the ferrite phase and martensite phase will be difficult. For this reason, in calculating the above-mentioned IAF and IBS, the cross-sectional microstructure is examined by an optical microscope to find the area ratios of the ferrite phase and martensite phase and the peak intensity of the α phase is apportioned by the area ratios.

### [Conductive Layer Including Conductive Carbonaceous Material]

The stainless steel sheet according to the present embodiment can have a conductive layer including a conductive carbonaceous material at least at one surface. Due to this, the contact resistance with the gas diffusion layer becomes lower.

As the conductive carbonaceous material, graphite and acetylene black and ketjen black and other carbon black etc. may be mentioned. As the ketjen black, for example, Ketjen Black EC, Ketjen Black EC600JD, Carbon ECP, Carbon ECP600JD, and other commercially available products made by Lion Corporation can be used. As the acetylene black, Denka Black (^{®}) made by Denka may be mentioned.

The conductive layer including graphite can for example be confirmed by the Raman spectrum of the conductive layer exhibiting the peak of graphite. Specifically, if Raman spectroscopy of the conductive layer gives peaks of the D band and G band and the half width of the G band is 100 cm⁻¹ or less, it can be judged that the conductive layer sufficiently includes graphite. If the half width of the G band is more than 100 cm⁻¹, it can be judged that the conductive layer does not sufficiently contain graphite.

The conductive layer may also be a carbon-resin composite layer having a carbonaceous material dispersed in a matrix resin.

A carbon-resin composite layer contains a carbonaceous material and a matrix resin comprised of a thermoplastic resin or a thermosetting resin. The carbon-resin composite layer preferably has a volume ratio (C/R) of the carbonaceous material (C) and matrix resin (R) of 6/4 to 9/1. If the volume ratio (C/R) is smaller than 6/4, sometimes the conductivity falls, while if larger than 9/1, sometimes the flexibility, pliability, and corrosion resistance become inferior.

The thickness of the carbon-resin composite layer is preferably 0.02 to 5.0 mm. If the thickness is less than 0.02 mm, sometimes corrosion starts from slight cracks in the carbon-resin composite layer, while if greater than 5.0 mm, sometimes the pliability is detrimentally affected. The thickness of the carbon-resin composite layer is more preferably 0.05 to 2.0 mm.

For the carbonaceous material forming the carbon-resin composite layer, though not limited to this, use may be made of natural graphite, synthetic graphite, expandable graphite, expanded graphite, flake graphite, spherical graphite, or other powder alone or in mixtures of two or more types. From the viewpoint of the pliability and conductivity, a powder of expandable graphite or expanded graphite is preferably contained.

The matrix resin forming the carbon-resin composite layer may be a thermoplastic resin and may be a thermosetting resin.

For the thermoplastic resin, though not limited to this, a propylene resin (PP), polyethylene resin (PE), polyamide resin (PA), polyphenylene sulfide resin (PPS), polymethylpentene resin (PMP), polyether ether ketone resin (PEEK), polyphenylene ether resin (PPE), liquid crystal polymer resin (LCP), polyamideimide resin (PAI), polysulfone resin (PSU), polyethylene terephthalate resin (PET), and polybutylene terephthalate resin (PBT) alone or in mixtures of two or more types can be used.

For the PP, PE, PMP, and other polyolefin resins, modified polyolefin resins obtained by graft modification of part or all of the polyolefin resin by an unsaturated carboxylic acid or its derivative is preferably used. By using such a modified polyolefin resin, improvement of the pliability and improvement of the adhesion with stainless steel sheet can be expected and thereby a drop in the contact resistance can also be expected.

For the thermosetting resin, though not limited to this, a phenol resin and epoxy resin alone or in a mixture of the two can be used.

### [Adhesive Layer]

The stainless steel sheet according to the present embodiment may further be provided with an adhesive layer between the surface of the stainless steel sheet and a conductive layer.

For the adhesive composition forming the adhesive layer, though not limited to this, an adhesive composition including an adhesive polyolefin resin (for example, Admer (product name) made by Mitsui Chemicals Inc.), an adhesive composition including a modified polyolefin resin graft modified by an unsaturated carboxylic acid (for example, Unistole (product name) made by Mitsui Chemicals Inc.), an adhesive composition including a modified polyolefin resin graft modified by a halogen (for example, Toyo-Tac (product name) made by Toyobo Co. Ltd.), a phenol resin adhesive composition (for example, AH-1148 (product name) made by Lignyte Co., Ltd.), and an epoxy resin adhesive composition (for example, YSLV-80XY (product name) made by Nippon Steel Chemical & Material Co., Ltd.) can be used. The adhesive composition is preferably one which includes a modified polyolefin resin comprised of a polyolefin resin graft modified in part or whole by an unsaturated carboxylic acid or its derivative (for example, see Japanese Unexamined Patent Publication No. 2005-146178).

The thickness of the adhesive layer is preferably 0.1 to 10 µm. If the thickness of the adhesive layer is less than 0.1 µm, sometimes the adhesive strength is insufficient. If the thickness of the adhesive layer is more than 10 µm, sometimes the conductivity is insufficient.

### [Method of Production of Stainless Steel Sheet]

FIG. 3 is a flow chart showing one example of the method of production of the stainless steel sheet according to the present embodiment. This method of production is just an illustration. The method of production of the stainless steel sheet according to the present embodiment is not limited to this method.

This method of production comprises a step of preparing a slab (step S1), a step of hot rolling and cold rolling the slab to obtain a thickness 5 to 200 µm rolled steel sheet (step S2), and a step of annealing and cooling the rolled steel sheet in a gaseous atmosphere containing nitrogen (step S3). Below, each step will be explained in detail.

### [Slab Preparation Step]

Slabs with chemical compositions comprised of, by mass%, Cr: 20 to 26%, N: 0.1% or less, Si: 2.0% or less, C: 0.040% or less, P: 0.030% or less, S: 0.030% or less, Mn: 1.5% or less, Cu: 0.50% or less, Mo: 3.00% or less, Ni: 5.00% or less, Ca: less than 50 ppm, sol. Al: less than 300 ppm, balance: Fe and impurities are prepared (step S1).

The chemical composition of each of the slabs is the same as the chemical composition of the above-mentioned stainless steel sheet except for the N content. The N content of each slab is made 0.1% or less because if the N content is more than 0.1%, the deformation resistance becomes higher and rolling to obtain a steel sheet becomes difficult. The upper limit of the N content is preferably 0.05%.

The step of preparing each slab, though not limited to this, for example can be performed as follows:
The materials are melted. As the materials, ferrochrome and ferrosilicon used for production of stainless steel, cast iron, scrap of ferrite-based stainless steel etc. can be used. The melting is performed mainly by an electric furnace. At the laboratory level, this may be performed by a vacuum induction heating furnace. To reduce the amount of carbon, gaseous constituents, and metallic inclusions, the steel is refined. For the refining, the AOD (argon-oxygen-decarburization) method, VOD (vacuum-oxygen-decarburization) method, V-AOD method, etc. can be applied. After that, the steel is rendered a slab of a shape suitably for rolling by a continuous casting apparatus or casting into a case. The chemical composition of the slab can be adjusted by blending the materials or the refining conditions.

### [Rolling Step]

Each slab is hot rolled and cold rolled to obtain a thickness 5 to 200 µm rolled steel sheet (step S2). The hot rolling and cold rolling may be performed repeatedly. Annealing and other intermediate heat treatment and pickling may also be performed in accordance with need. Further, in addition to hot rolling and cold rolling, hot forging and cutting may further be performed in accordance with need.

The rolling step, though not limited to this, for example, can be performed in the following way.

A tandem mill or Steckel mill is used to render the slab a hot coil. The hot coil is annealed and pickled. Further, a multistage roll cold rolling mill is used for cold rolling to render it a thickness 5 to 200 µm rolled steel sheet.

### [Annealing Step]

The rolled steel sheet is annealed and cooled in a gaseous atmosphere containing nitrogen (step S3). Due to this step, the steel sheet is made to absorb nitrogen from the front and back surfaces to render the microstructures of the surface layers at the front and back surfaces of the steel sheet microstructures comprising mainly an austenite phase.

The ratio of the partial pressure of nitrogen to the total pressure of the treatment gases is preferably 0.2 to 0.9. If the ratio of the partial pressure of nitrogen to the total pressure is less than 0.2, nitrogen is not sufficiently supplied from the surface. If the thickness of the steel sheet is great, it becomes difficult to form the first region so as to cover the entire front and back surfaces of the steel sheet. On the other hand, if the ratio of the partial pressure of nitrogen to the total pressure is higher than 0.9, Cr nitrides are excessively formed on the surface and there is a possibility of their becoming starting points of work fracturing. The upper limit of the ratio of the partial pressure of nitrogen to the total pressure of the treatment gases is preferably 0.75. For the gas mixed with the nitrogen, hydrogen is preferably used for preventing the steel sheet from oxidizing. Instead of hydrogen or in addition to hydrogen, argon may also be used.

The temperature of the annealing is preferably 950 to 1200°C. If the temperature of the annealing is less than 950°C, in the equilibrium state, not only the austenite phase, but also Cr₂N phase are present, so there is a possibility the γ phase fraction of the first region will not be able to be made higher. On the other hand, if the temperature of the annealing is more than 1200°C, in particular if Si is contained, there is a possibility that liquid phases will form near the grain boundaries and will melt causing embrittlement. The temperature of the annealing differs depending on the Cr content, but 1050 to 1150°C is more preferable.

The holding time of the annealing has to be managed within a narrow range dependent on the thickness of the steel sheet and the nitrogen partial pressure. Austenitization by nitrogen absorption proceeds from the surface toward the inside of the sheet thickness, but for production of the stainless steel sheet according to the present embodiment, progression of austenitization has to be stopped in the middle. If the holding time is too short, even if the sheet thickness is small, the ferrite phase is liable to remain at the surface. On the other hand, if the holding time is too long, the cross-sectional area ratio of the second region becomes too low and the attraction force to a magnet becomes insufficient.

The annealed steel sheet is cooled. The steel sheet is preferably quickly cooled atter annealing. If slowly cooling the steel sheet after annealing, there is a possibility of nitrides excessively precipitating in the interim temperature region. However, the steel sheet of the present embodiment has a thickness of 5 to 200 µm. The ratio of the heat capacity with respect to the heat radiating area is small, so if allowed to cool outside the furnace, it will be cooled sufficiently quickly. If water cooling etc., the steel sheet will deform due to the rapid cooling strain, so this is not preferable.

The annealing step can for example be performed by running the steel sheet through an annealing line called a continuous bright annealing line.

Due to this annealing step, the first region comprising mainly an austenite phase is formed at the surface layers of the front and back surfaces of the steel sheet. After the annealing step, the surface layers of the steel sheet have an N content of 0.01 to 5.0 mass%. The cross-sectional area ratio of the second region is adjusted to become 20% or more. If rendering just the surface layer of one surface the austenite phase, the opposite surface (surface not being made austenite phase) need only be masked.

The N content of the steel sheet after the annealing step can be adjusted in accordance with the N content of the slab and the conditions of the annealing. Specifically, the N content of the steel sheet after the annealing step can be raised by raising the N content of the slab, by raising the nitrogen partial pressure at the time of annealing, by raising the temperature of the annealing, or by lengthening the holding time of the annealing.

### [Pickling Step]

The steel sheet after the annealing step may also be pickled by a solution containing a nonoxidizing acid (step S4). This pickling step is any step and need not be performed. If performing a pickling step, it is possible to lower the surface contact resistance of the steel sheet. If performing pickling, a nonoxidizing acid is used to prevent the surface of the steel sheet from oxidizing. The acid which can be used is, for example, (1) hydrofluoric acid, (2) sulfuric acid, (3) hydrochloric acid, and mixtures of these acids.

### (1) Hydrofluoric acid

The concentration of the hydrofluoric acid is preferably 1 to 5 mass%. The treatment temperature is preferably 35 to 75°C. If less than 35°C, there is a possibility of the treatment becoming long in time. Further, in the summer season, the rise in temperature due to the heat emitted at the time of pickling cannot be completely controlled and there is a possibility of the treatment being governed by the outside air temperature and stable treatment not being possible. On the other hand, if made higher than 75°C, sometimes corrosive fumes are generated from the treatment solution. The treatment temperature is more preferably 40 to 55°C. The treatment time is preferably 2 to 10 minutes.

### (2) Sulfuric acid

The concentration of the sulfuric acid is preferably 10 to 40 mass%. The treatment temperature is preferably 35 to 75°C. If less than 35°C, there is a possibility of the treatment becoming long in time. Further, in the summer season, the rise in temperature due to the heat emitted at the time of pickling cannot be completely controlled and there is a possibility of the treatment being governed by the outside air temperature and stable treatment not being possible. On the other hand, if made higher than 75°C, sometimes toxic SO_{X} gas is generated from the treatment solution. The concentration is more preferably 15 to 30 mas%. The treatment temperature is more preferably 50 to 60°C. The treatment time is preferably 0.5 to 5 minutes.

### (3) Hydrochloric acid

The concentration of the hydrochloric acid is preferably 4 to 15 mass%. The treatment temperature is preferably 35 to 75°C. If less than 35°C, there is a possibility of the treatment becoming long in time. Further, in the summer season, the rise in temperature due to the heat emitted at the time of pickling cannot be completely controlled and there is a possibility of the treatment being governed by the outside air temperature and stable treatment not being possible. On the other hand, if made higher than 75°C, sometimes corrosive fumes are generated from the treatment solution. The concentration is more preferably 4 to 12 mass%. The treatment temperature is more preferably 40 to 55°C. The treatment time is preferably 2 to 15 minutes.

Above, one example of the method of production of stainless steel sheet according to the present embodiment was explained. In this example, Fe-Cr-based stainless steel was processed to steel sheet, then was made to absorb nitrogen to form a lamellar first region comprising mainly an austenite phase on each of the surface layers of the front and back surfaces of the stainless steel sheet. Due to this, it is possible to improve the corrosion resistance of the stainless steel sheet. Further, by having a lamellar second region comprising mainly a ferrite phase between first regions, the stainless steel sheet can be provided with a sufficient magnetic property for being held and manipulated by magnetic force.

The method of production of the stainless steel sheet according to the present embodiment is not limited to this. For example, it is also possible to superpose austenitic stainless steel sheet and ferritic stainless steel sheet and produce the stainless steel sheet according to the present invention by clad rolling. If desiring to form the first region on both surfaces, it is sufficient to clad austenitic stainless steel sheets on both surfaces of ferritic stainless steel sheet. If desiring to form the first region on only one surface, it is sufficient to clad austenitic stainless steel sheet on one surface of ferritic stainless steel sheet.

### [Formation of Conductive Layer]

If forming a conductive layer having a conductive carbonaceous material on a stainless steel sheet, it is possible to use the following method.

A mass (block etc.) of conductive carbonaceous material is rubbed against the Cr nitride film on the surface of the stainless steel sheet. The conductive carbonaceous material is preferably graphite. Graphite is weak in bonds between faces of six-member rings comprised of carbon atoms. For this reason, if rubbing graphite against a Cr nitride film, the graphite becomes flake-like grains and are arranged substantially in parallel on the surface of the Cr nitride film. Due to this, it is possible to effectively cover the surface of the Cr nitride film with graphite.

If forming a carbon-resin composite layer having a carbonaceous material dispersed in a matrix resin as a conductive layer, the following method can be used.

A mixture containing a carbonaceous material and matrix resin is directly hot pressed on the surface of a stainless steel sheet. Alternatively, a slurry comprised of a carbonaceous material and matrix resin dispersed in a solvent may be coated on the surface of a stainless steel sheet using a doctor blade etc., dried, then hot pressed.

If forming a carbon-resin composite layer, the method of hot pressing a powder mixture including powder of a carbonaceous material and powder of a matrix resin to form in advance a carbon-resin composite layer and laying the obtained carbon-resin composite layer on the surface of the stainless steel sheet by a hot press is particularly preferable. Before the stacking step, the surface of the stainless steel sheet may also be coated with an adhesive composition. In this case, the stainless steel sheet and the carbon-resin composite layer are stacked via an adhesive layer.

### [Separator for Fuel Battery]

As an application of the stainless steel sheet according to one embodiment of the present invention, a separator for a fuel battery can be mentioned. The separator for a fuel battery according to one embodiment of the present invention has a stainless steel sheet according to the present embodiment. The separator for a fuel battery according to the present embodiment more specifically is comprised of the stainless steel sheet according to the present embodiment on which relief shapes functioning as channels are formed. The separator for a fuel battery according to the present embodiment can be produced by press-forming the stainless steel sheet according to the present embodiment. That is, in other words, the separator for a fuel battery has a part obtained by working the stainless steel sheet according to the present embodiment.

### [Fuel Battery Cell and Fuel Battery Stack]

Furthermore, the fuel battery cell according to one embodiment of the present invention has separators for a fuel battery according to the present embodiment. The fuel battery stack according to one embodiment of the present invention has a plurality of fuel batteries according to the present embodiment.

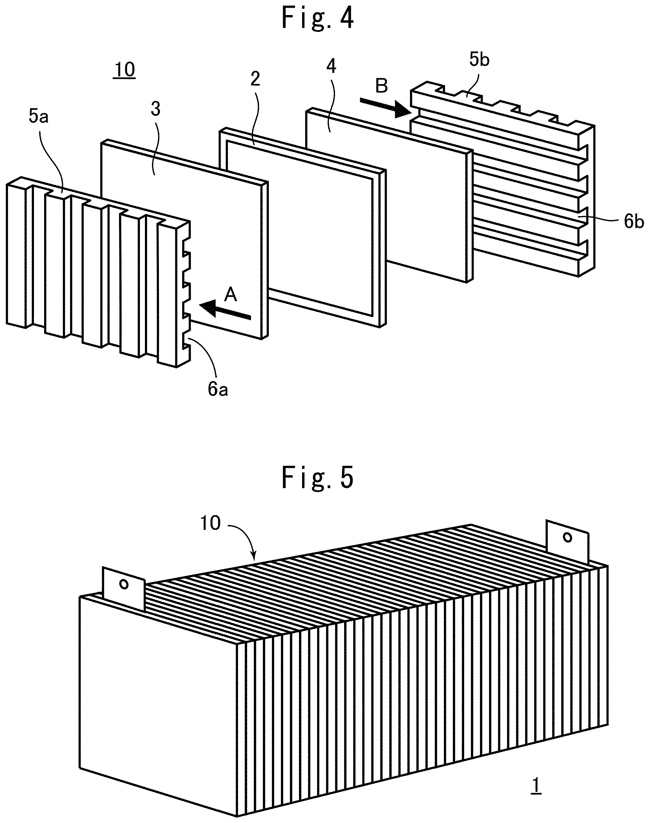

FIG. 4 is a disassembled perspective view showing the configuration of a cell 10 of one example of a polymer electrolyte fuel battery cell. FIG. 5 is a perspective view of a polymer electrolyte fuel battery 1 comprised of a set (stack) of a plurality of cells 10. The cell 10 of FIG. 4 and the polymer electrolyte battery 1 of FIG. 5 are both illustrations. The configurations of the fuel battery cell and fuel battery stack according to the present embodiments are not limited to these.

The cell 10, as shown in FIG. 4, is structured having an anode (anode side gas diffusion electrode layer or fuel battery membrane) 3 laid on one surface of a polymer electrolysis membrane 2, having a cathode (cathode side gas diffusion electrode layer or oxidizer electrode membrane) 4 on the other surface, and having separators 5a, 5b laid on the two surfaces of the stack.

Note that, the separator for a fuel battery according to the present embodiment may be a separator having channels for cooling water (water separator). The separator for a fuel battery according to the present embodiment may also be water-cooling type fuel battery with a water separator arranged between one cell and another or for each plurality of cells.

As the polymer electrolyte membrane 2, a fluorine-based proton conducting membrane having hydrogen ion exchange groups can be used. Each of the anode 3 and cathode 4 is sometimes provided with a catalyst layer comprised of particles of a platinum catalyst and graphite powder and, in accordance with need, fluorine resin having hydrogen ion exchange groups. In this case, reaction is promoted by contact of the fuel gas or oxidizing gas with the catalyst layer.

The separator 5a is provided with channels 6a. Fuel gas (hydrogen or hydrogen-containing gas) A flows in the channels 6a and hydrogen is supplied to the anode 3. The separator 5b is provided with channels 6b. Air or another oxidizing gas B flows in the channels 6b and oxygen is supplied to the cathode 4. Due to the thus supplied hydrogen and oxygen, an electrochemical reaction is caused and DC power is generated.

Above, a separator for a fuel battery was explained as an application of the stainless steel sheet according to an embodiment of the present invention, but in addition, it is also possible to make use of the features of the present invention to apply it as an electromagnetic shield material used for automobile radar or sensors or for smart phones or as electromagnetic absorbing material dealing with a broad band by combining magnetic particles or metallic nanoparticles or carbon black nanoparticles etc. In addition, there are various applications for stainless steel sheets having corrosion resistance and magnetic properties and extend beyond those clarified in the present application as well, needless to say.

### EXAMPLES

Below, examples will be used to explain the present invention more specifically. The examples are cases of provision of first regions on both of the surface layers of stainless steel sheets. The present invention is not limited to these examples. For example, if forming first regions on only single surfaces, for example, it is possible to deal with this by masking the other surface side to perform annealing etc.

### [Example 1] (without conductive layer)

### [Production of Rolled Steel Sheet]

Steel of each of the 17 types of chemical compositions shown in Table 1 was melted in a high frequency induction heating type 30 kg vacuum melting furnace to produce a diameter 125 to 115 mm, height 320 mm substantially frustoconical shape cast ingot.

**[Table 1]**

| No. | Chemical composition (units mass%, balance of Fe and impurities) | | | | | | | | | | | | |
|---|---|---|---|---|---|---|---|---|---|---|---|---|---|
| | C | Si | Mn | P | S | Cu | Cr | Ni | Mo | sol. Al | N | Ca | Remarks |
| Material 1 | 0.022 | 0.35 | 0.38 | 0.022 | 0.001 | 0.45 | 19.38 | 0.06 | 0.11 | 0.010 | 0.025 | 0.0004 | |
| Material 2 | 0.020 | 0.40 | 0.35 | 0.015 | 0.001 | 0.45 | 20.23 | 0.04 | 0.14 | 0.025 | 0.015 | 0.0003 | |
| Material 3 | 0.018 | 1.50 | 0.48 | 0.018 | 0.002 | 0.30 | 22.81 | 0.03 | 0.18 | 0.025 | 0.015 | 0.0004 | |
| Material 4 | 0.022 | 0.45 | 0.41 | 0.019 | 0.001 | 0.32 | 23.53 | 0.04 | 0.08 | 0.002 | 0.014 | 0.0006 | |
| Material 5 | 0.040 | 0.32 | 0.28 | 0.023 | 0.001 | 0.04 | 24.65 | 0.04 | 0.11 | 0.008 | 0.008 | 0.0003 | |
| Material 6 | 0.030 | 0.29 | 0.29 | 0.021 | 0.001 | 0.02 | 25.80 | 0.05 | 0.09 | 0.011 | 0.005 | 0.0002 | |
| Material 7 | 0.022 | 0.15 | 0.10 | 0.018 | 0.002 | 0.15 | 27.80 | 0.08 | 0.13 | 0.025 | 0.006 | 0.0004 | Edge crack |
| Material 8 | 0.030 | 2.50 | 0.10 | 0.018 | 0.002 | 0.15 | 23.45 | 0.09 | 0.06 | 0.025 | 0.006 | 0.0002 | Edge crack |
| Material 9 | 0.030 | 0.27 | 0.31 | 0.023 | 0.002 | 0.22 | 23.50 | 0.20 | 0.10 | 0.010 | 0.005 | 0.0003 | |
| Material 10 | 0.030 | 0.30 | 0.30 | 0.021 | 0.002 | 0.23 | 23.61 | 1.98 | 0.13 | 0.020 | 0.005 | 0.0003 | |
| Material 11 | 0.040 | 0.30 | 0.30 | 0.020 | 0.002 | 0.18 | 23.43 | 4.51 | 0.10 | 0.025 | 0.004 | 0.0003 | |
| Material 12 | 0.030 | 0.31 | 0.32 | 0.020 | 0.002 | 0.20 | 23.52 | 0.05 | 0.55 | 0.024 | 0.005 | 0.0004 | |
| Material 13 | 0.030 | 0.30 | 0.30 | 0.019 | 0.001 | 0.19 | 23.39 | 0.04 | 2.02 | 0.023 | 0.005 | 0.0002 | |
| Material 14 | 0.028 | 0.32 | 0.29 | 0.020 | 0.002 | 0.21 | 23.38 | 0.05 | 2.91 | 0.020 | 0.004 | 0.0003 | |
| Material 15 | 0.030 | 0.30 | 0.30 | 0.022 | 0.002 | 0.21 | 23.55 | 2.99 | 1.50 | 0.021 | 0.005 | 0.0002 | |
| Material 16 | 0.040 | 0.32 | 0.28 | 0.023 | 0.001 | 0.04 | 23.48 | 5.80 | 0.11 | 0.025 | 0.015 | 0.0003 | |
| Material 17 | 0.040 | 0.30 | 0.30 | 0.020 | 0.002 | 0.18 | 23.40 | 0.06 | 3.50 | 0.008 | 0.008 | 0.0003 | Edge crack |

Each of these cast ingots was ground by a grinder to remove the surface black skin at the side surfaces of the frustoconical shape. After grinding, it was heated at 1250°C for 3 hours and hot forged until a final thickness of 25 mm. The black skin after the forging was ground off until a thickness of steel sheet of 20 mm. After grinding, the steel sheet was heated at 1200°C for 2 hours and hot rolled until a thickness of 4 mm. The black skin after the rolling was ground off until a thickness of the steel sheet of 3 mm. After grinding, the steel sheet was cold rolled until a thickness of 0.5 mm. After the cold rolling, the steel sheet was process annealed at 800°C for 10 minutes in an argon atmosphere. After that, it was cold rolled until the thickness shown in the later described Table 3.

However, in each of Materials 7, 8, and 17, there was large edge cracking at the thickness 0.5 mm stage, therefore the following steps were not performed. The workabilities of the Materials 7, 8, and 17 were low conceivably because, respectively, the Cr content, Si content, and Mo content were too high.

### [Annealing Treatment]

From each rolled steel sheet, a width 70 mm×length 200 mm material was cut out. A continuous annealing simulator apparatus was used to perform bright annealing treatment and nitrogen absorption treatment in a solid phase state (below, referred to as "annealing treatment").

The annealing treatment used gases of a partial pressure shown in Table 2. Note that the total pressure was made 1 atm.

**[Table 2]**

| Class | Nitrogen partial pressure | Hydrogen partial pressure |
|---|---|---|
| N25 | 0.25 | 0.75 |
| N35 | 0.35 | 0.65 |
| N50 | 0.50 | 0.50 |
| N75 | 0.75 | 0.25 |

The conditions of the annealing treatment were made the ones shown in the later described Table 3. Each test piece was held at a temperature described in the column "holding temperature" of Table 3 for a time period described in the column "holding time", then rapidly cooled as heat treatment. The cooling speed was made 8 to 10°C/s in terms of average cooling speed down to 500°C.

### [Pickling Treatment]

After the annealing treatment, the rolled steel sheet was dipped for 1 minute in a concentration 25 mass% of sulfuric acid held at 60°C to pickle it and obtain stainless steel sheet.

### [Investigation of Microstructure Etc.]

### (1) Measurement of N content of stainless steel sheet

The N content in the steel after nitrogen absorption was obtained by taking a sample for analysis from the total thickness of each stainless steel sheet and measuring the content by the inert gas carrier melting thermo-conductimetric method.

### (2) Confirmation of having first region and second region

From each stainless steel sheet, a test piece was taken so that the cross-section vertical to the rolling direction became the examined surface. This was buried in a resin and polished to a mirror surface, then was etched using an etching solution comprised of aqua regia and glycerin in a volume ratio of 4:1 until the metallographic microstructure appeared. FIG. 1 shows a cross-sectional photograph of a stainless steel sheet of TP No. 4 of Table 3 explained later. As shown in FIG. 1, if the stainless steel sheet had a first region Al and a second region A2, the boundary could be clearly discerned by etching.

The region comprising mainly a ferrite phase was etched more deeply than the region comprising mainly an austenite phase. Inside the region comprising mainly a ferrite phase, there was little difference in etching among the crystal grains, the grain boundaries were also etched shallowly, and the insides of the grains were etched relatively smoothly. This is believed because no nitrogen intrusion occurred, the microstructure remained as the original ferrite phase, and only a heat history due to high temperature annealing was received.

As opposed to this, the region comprising mainly an austenite phase was etched shallower than the region comprising mainly a ferrite phase. Inside the region comprising mainly an austenite phase, there was a large difference in etching among the crystal grains, the grain boundaries were etched relatively clearly, and the insides of the grains were etched relatively coarsely. This is believed because greater nitrogen concentration occurred due to nitrogen intrusion while the surroundings were restrained in the solid phase state and caused the ferrite phase to transform to the austenite phase, so strain built up inside the grains.

In many stainless steel sheets, it was possible to clearly determine the boundary between the first region and the second region from the sectional photos. In some stainless steel sheets, the boundary between the first region and the second region was confirmed by semiquantitative analysis by an SEM-EDS.

The fact that the first region is comprised of a microstructure comprising mainly an austenite phase and the second region is comprised of a microstructure comprising mainly a ferrite phase was confirmed by XRD. XRD used a Rigaku X-ray diffraction measurement device RINT2500 and a Co ray source under excitation conditions of 30 kV and 100 mA to measure the 10° to 110° 2θ range by the θ-2θ method.

Specifically, the cross-section was examined to confirm that the stainless steel sheet has two types of regions, then the surface of the steel sheet and the ground down surface of the steel sheet after grinding down the sheet in thickness to half from one side were respectively analyzed by XRD. In XRD at the surface, if the total of the peak intensities of up to the top two strongest peaks of the austenite phase is 2 times or more of the totals of the peak intensities of up to the top two strongest peaks of the other phases, it was judged that the region of the surface layer was comprised of a microstructure comprising mainly an austenite phase. Similarly, in the XRD at the steel sheet ground down to half of the sheet thickness, if the total of the peak intensities of up to the top two strongest peaks of the ferrite phase is 2 times or more of the totals of the peak intensities of up to the top two strongest peaks of the other phases, it was judged that the region of the surface layer was comprised of a microstructure comprising mainly a ferrite phase.

### (3) Measurement of cross-sectional area ratio of second region

After the boundary between the first region and the second region was determined, the respective areas were found by image analysis software. Defining the area of the second region as "A" and the area of the regions other than the second region as "B", the cross-sectional area ratio of the second region was found from A/(A+B).

### [Magnetic Attraction Test]

To evaluate the existence of any attraction force to a magnet sufficient for conveyance by the magnet, a simple test using a commercially available magnet was performed.

From each stainless steel sheet, a 100 mm×100 mm test piece was cut out and laid on a 100 mm×100 mm×5 mm propylene (PP) sheet. It was evaluated if an evaluation use magnet could be used to lift up the test piece. As the evaluation use magnet, a cylindrical type neodymium magnet (Φ10×10mm, Material No. N40) made by NeoMag Co., Ltd. was used.

More specifically, the test piece was placed on a wood horizontal flat surface, a PP sheet was placed on it to completely superpose it, an evaluation use magnet was placed at the center of the PP sheet, and only the magnet was used to gently lift the test piece up. At that time, the case where the test piece was attracted to the magnet and lifted up together in the state through the PP sheet was defined as "pass" and the case where the test piece was not lifted up but only the magnet was lifted up was defined as "fail".

### [Corrosion Resistance Test]

For evaluation of the corrosion resistance, the transpassive corrosion resistance was evaluated. The transpassive corrosion resistance was evaluated by dipping each stainless steel sheet in a 80°C, pH3 H₂SO₄ solution simulating a battery environment, blowing in Ar gas to render an airless state, holding the sheet in a natural potential state for 10 minutes, then anodically polarizing it at a 20 mV/min sweep rate from a natural potential to 1.4V vs SHE. In the stainless steel sheet, an increase in the current density was observed from about 0.9V vs SHE due to transpassive corrosion. The maximum current density at 0.9V or more, considered to be the start of entry into a transpassive state, was used as an indicator of the transpassive corrosion resistance. If the maximum current density at 0.9V or more was less than 100 µA/cm², it was evaluated that the transpassive corrosion resistance was excellent and the corrosion resistance was "excessive". If the maximum current density was 100 µA/cm² or more, it was evaluated that the transpassive corrosion resistance was inferior and the corrosion resistance was "insufficient".

The results are shown in Table 3.

**[Table 3]**

| | | | | | | | | | No conductive layer | | Conductive layer | |
|---|---|---|---|---|---|---|---|---|---|---|---|---|
| TP# | Sheet material | Sheet thickness (mm) | Annealing treatment | | | First region N content (mass%) | First region comprising mainly austenite | Second region area ratio (%) | Magnetic attraction test | Corrosion resistance | Magnetic attraction test | Corrosion resistance |
| | | | Atmosphere | Holding temp. (°C) | Holding time (s) | | | | | | | |
| 1 | Material 1 | 51 | N25 | 1100 | 80 | 0.44 | Yes | 37 | Pass | Insufficient | Pass | Insufficient |
| 2 | Material 2 | 100 | N75 | 1100 | 180 | 0.43 | Yes | 39 | Pass | Good | Pass | Good |
| 3 | Material 3 | 51 | N25 | 1100 | 80 | 0.44 | Yes | 37 | Pass | Good | Pass | Good |
| 4 | Material 5 | 51 | N25 | 1100 | 80 | 0.44 | Yes | 37 | Pass | Good | Pass | Good |
| 5 | Material 6 | 100 | N75 | 1100 | 180 | 0.43 | Yes | 39 | Pass | Good | Pass | Good |
| 6 | Material 4 | 30 | N75 | 1100 | 20 | 0.53 | Yes | 25 | Pass | Good | Pass | Good |
| 7 | Material 4 | 30 | N35 | 1100 | 20 | 0.39 | Yes | 43 | Pass | Good | Pass | Good |
| 8 | Material 4 | 30 | N25 | 1100 | 30 | 0.46 | Yes | 34 | Pass | Good | Pass | Good |
| 9 | Material 4 | 30 | N25 | 1100 | 20 | 0.31 | Yes | 56 | Pass | Good | Pass | Good |
| 10 | Material 4 | 51 | N25 | 1100 | 50 | 0.29 | Yes | 59 | Pass | Good | Pass | Good |
| 11 | Material 4 | 51 | N25 | 1100 | 80 | 0.44 | Yes | 37 | Pass | Good | Pass | Good |
| 12 | Material 4 | 51 | N25 | 1100 | 100 | 0.55 | Yes | 21 | Pass | Good | Pass | Good |
| 13 | Material 4 | 51 | N75 | 1100 | 50 | 0.48 | Yes | 32 | Pass | Good | Pass | Good |
| 14 | Material 4 | 51 | N35 | 1100 | 50 | 0.36 | Yes | 49 | Pass | Good | Pass | Good |
| 15 | Material 4 | 51 | N50 | 1100 | 50 | 0.42 | Yes | 40 | Pass | Good | Pass | Good |
| 16 | Material 4 | 100 | N25 | 1100 | 360 | 0.51 | Yes | 28 | Pass | Good | Pass | Good |
| 17 | Material 4 | 100 | N35 | 1100 | 240 | 0.43 | Yes | 38 | Pass | Good | Pass | Good |
| 18 | Material 4 | 100 | N75 | 1100 | 120 | 0.29 | Yes | 59 | Pass | Good | Pass | Good |
| 19 | Material 4 | 100 | N25 | 1100 | 240 | 0.34 | Yes | 52 | Pass | Good | Pass | Good |
| 20 | Material 4 | 100 | N75 | 1100 | 180 | 0.43 | Yes | 39 | Pass | Good | Pass | Good |
| 21 | Material 4 | 100 | N50 | 1100 | 240 | 0.51 | Yes | 28 | Pass | Good | Pass | Good |
| 22 | Material 4 | 200 | N75 | 1100 | 800 | 0.48 | Yes | 32 | Pass | Good | Pass | Good |
| 23 | Material 4 | 200 | N50 | 1100 | 800 | 0.43 | Yes | 39 | Pass | Good | Pass | Good |
| 24 | Material 4 | 200 | N75 | 1100 | 600 | 0.36 | Yes | 49 | Pass | Good | Pass | Good |
| 25 | Material 4 | 51 | N35 | 1100 | 80 | 0.57 | Yes | 18 | Fail | Good | Fail | Good |
| 26 | Material 4 | 100 | N50 | 1100 | 120 | 0.25 | No | 64 | Pass | Insufficient | Pass | Insufficient |
| 27 | Material 9 | 51 | N25 | 1100 | 80 | 0.44 | Yes | 37 | Pass | Good | Pass | Good |
| 28 | Material 10 | 51 | N25 | 1100 | 80 | 0.45 | Yes | 37 | Pass | Good | Pass | Good |
| 29 | Material 11 | 100 | N75 | 1100 | 180 | 0.43 | Yes | 39 | Pass | Good | Pass | Good |
| 30 | Material 12 | 51 | N25 | 1100 | 80 | 0.44 | Yes | 37 | Pass | Good | Pass | Good |
| 31 | Material 13 | 100 | N75 | 1100 | 180 | 0.43 | Yes | 39 | Pass | Good | Pass | Good |
| 32 | Material 14 | 51 | N25 | 1100 | 80 | 0.44 | Yes | 37 | Pass | Good | Pass | Good |
| 33 | Material 15 | 51 | N25 | 1100 | 80 | 0.48 | Yes | 32 | Pass | Good | Pass | Good |
| 34 | Material 16 | 51 | N25 | 1100 | 20 | 0.58 | Yes | 17 | Fail | Good | Fail | Good |

The TP Nos. 2 to 24 and 27 to 33 stainless steel sheets gave good results in the magnetic attachment test and corrosion resistance test.

The TP No. 1 stainless steel sheet was insufficient in corrosion resistance. This is believed because the Cr content of the Material 1 was too low.

The TP No. 25 stainless steel sheet was insufficient in attraction to magnets. This is believed because the cross-sectional area ratio of the second region was low. The TP No. 25 stainless steel sheet was low in cross-sectional area ratio of the second region because, it is believed, the time period of the annealing treatment was too long in relation with the thickness of the sheet material and the annealing atmosphere.

The TP No. 26 stainless steel sheet was insufficient in corrosion resistance. This is believed because the ferrite phase was exposed at part of the surface of the stainless steel sheet. The ferrite phase was exposed at part of the surface because, it is believed, that the time period of the annealing treatment was too short in relation to the thickness of the sheet material and annealing atmosphere.

The TP No. 34 stainless steel sheet was insufficient in attraction force to magnets. This is believed because the cross-sectional area ratio of the second region was low. The cross-sectional area ratio of the second region of the stainless steel sheet of TP No. 34 was low because, it is believed, the Ni content of the sheet material 16 was too high and the austenitization at the annealing step proceeded too much.

### [Example 2] (with conductive layer)

Each of the stainless steel sheets of Example 1 was pickled, then formed with conductive layers by the following method at its two sides. The thickness of the conductive layer at each surface was made 50 µm.

### [Adhesive Layer Forming Step]

As the adhesive composition for forming the adhesive layer, a modified polyolefin resin adhesive (Unistole (product name) made by Mitsui Chemicals Inc.) was used. The front surface of the pickled stainless steel sheet was coated with a modified polyolefin adhesive by a tabletop coater to a coating thickness of 5 µm, then this was made to dry at room temperature for 10 minutes to form an adhesive layer. The back surface was similarly formed with an adhesive layer.

### [Formation of Conductive Layer]

As the conductive carbonaceous material, spherical graphite powder (SG-BH (product name), average particle size: 20 µm, made by Ito Graphite Co., Ltd.) and expandable graphite powder (100 (product name), average particle size: 160 µm, made by Ito Graphite Co., Ltd.) were used. As the matrix resin, a propylene resin (PP) powder (Flo-Thene HP-8522 (product name) made by Sumitomo Seika Co., Ltd.) was used. Spherical graphite powder in 60 vol%, expandable graphite powder in 10 vol%, and propylene resin powder in 30 vol% were mixed to obtain a powder mixture. The mixed powder in 0.2 g or 0.06 g was evenly charged into a female die having a 100×100×20 mm volume of a press machine (Tabletop PressMP-SCL made by Toyo Seiki Seisakusho)) and hot pressed as pre-pressing (pressure: 2 MPa, temperature: 180°C) to obtain a sheet form (thickness: 50 µm). The obtained sheet was laid on both surfaces of the base material with the adhesive layer prepared above and pressed at a heating temperature of 180°C and pressure of 5 MPa (main press, molding time 10 min).

### [Various Evaluations]

The stainless steel sheets after formation of conductive layers were also subjected to the above-mentioned magnetic attachment test and corrosion resistance test. The results are shown in the above Table 3.

As shown in Table 3, in the case of forming the conductive layer as well, the TP Nos. 2 to 24 and 27 to 33 stainless steel sheets exhibited excellent results in the magnetic attachment test and corrosion resistance test.

Above, embodiments of the present invention were explained. The above-mentioned embodiments are just illustrations for working the present invention. Accordingly, the present invention is not limited to the above embodiments. The above embodiments can be suitably modified to an extent within a range not deviating from its gist.

### REFERENCE SIGNS LIST

1. polymer electrolyte fuel cell
2. polymer electrolysis membrane
3. anode
4. cathode
5a, 5b. separators
6a, 6b. channels
10. cell

## Claims

1. A stainless steel sheet,
which stainless steel sheet has a 5 to 200 µm thickness,
has, in a cross-section vertical to a rolling direction, a first region comprising mainly an austenite phase formed at a surface layer of one or both the surfaces and a second region comprising mainly a ferrite phase at a region other than the first region, and
has an area ratio of the second region of 20% or more.

2. The stainless steel sheet according to claim 1, wherein a chemical composition of the second region comprises, by mass%,
Cr: 20.00 to 26.00%,
N: 0.10% or less,
Si: 2.00% or less,
C: 0.040% or less,
P: 0.030% or less,
S: 0.030% or less,
Mn: 1.50% or less,
Cu: 0.50% or less,
Mo: 3.00% or less,
Ni: 5.00% or less,
Ca: 50 ppm or less,
sol. Al: 300 ppm or less, and
balance: Fe and impurities.

3. The stainless steel sheet according to claim 2, wherein a chemical composition of the first region comprises, by mass%,
N: 0.01 to 5.0% and,
other than N, is the same as the second region.

4. The stainless steel sheet according to any one of claims 1 to 3, further comprising a conductive layer having a conductive carbonaceous material at least at one surface.

5. A separator for a fuel battery having the stainless steel sheet according to any one of claims 1 to 4.

6. A fuel battery cell having the separators for a fuel battery according to claim 5.

7. A fuel battery stack having a plurality of the fuel battery cells according to claim 6.
